# EUROPÄISCHE PATENTSCHRIFT

(11) **EP 1 052 138 B1**
(45) Veröffentlichungstag und Bekanntmachung des Hinweises auf die Patenterteilung: **12.10.2005**
(21) Anmeldenummer: 00107756.9
(22) Anmeldetag: 11.04.2000
(51) Int. Cl.: B60N 2/06

(54) **Einstellvorrichtung für einen Fahrzeugsitz**
Adjusting device for a vehicle seat
Dispositif de réglage pour un siège de véhicule

(30) Priorität: 11.05.1999 DE 19921806
(43) Veröffentlichungstag der Anmeldung: 15.11.2000
(73) Patentinhaber: KEIPER GmbH & Co. KG, 67657 Kaiserslautern (DE)
(72) Erfinder: Flick, Joachim, 42499 Hückeswagen (DE); Schüler, Rolf, 42579 Heiligenhaus (DE)
(74) Vertreter: Patentanwälte Hosenthien-Held und Dr. Held

(56) Entgegenhaltungen:
- EP-A- 0 370 502
- DE-A- 1 680 305
- DE-A- 4 405 870
- DE-A- 4 419 407
- DE-A- 19 647 448
- DE-C- 19 757 110
- US-A- 5 893 610

## Beschreibung

Die Erfindung betrifft eine Einstellvorrichtung für einen Fahrzeugsitz, insbesondere für einen Kraftfahrzeugsitz, mit den Merkmalen des Oberbegriffs des Anspruches 1 und einen Fahrzeugsitz mit den Merkmalen des Oberbegriffs des Anspruches 10.

Um einen manuell längseinstellbaren Fahrzeugsitz in einem zweitürigen Kraftfahrzeug beim Freischwenken seiner Rückenlehne zur Erleichterung des Einstiegs nach vorne schieben zu können, ist eine Längseinstellvorrichtung mit leicht gängigen Schienenführungen notwendig. Solche gängigen Schienenführungen haben aber den Nachteil, dass aufgrund des Gewichtes des Fahrzeugsitzes und des Benutzers der Fahrzeugsitz bei einer entsprechenden Neigung des Fahrzeuges, beispielsweise beim Anhalten am Berg, nach dem Entriegeln der Längseinstellvorrichtung der Fahrzeugsitz schnell in die hinterste Sitzposition fährt.

Aus der DE 196 47 448 A1 und der US 5 893 610 A ist jeweils eine Einstellvorrichtung der eingangs genannten Art zur Längseinstellung eines Fahrzeugsitzes bekannt, bei der an einer Oberschiene eine Seilrolle drehbar gelagert ist. Auf die Seilrolle ist ein Zugseil gewickelt, welches am vorderen Ende einer Unterschiene befestigt ist. Im Inneren der Seilrolle ist eine Spiralfeder angebracht, die gespannt wird, wenn der Fahrzeugsitz in eine hintere Sitzposition gebracht und dabei das Zugseil von der Seilrolle abgewickelt wird. Die Spiralfeder unterstützt dann das Verschieben in eine vordere Sitzposition. Diese Lösung befriedigt aber noch nicht alle Wünsche.

Eine schwenkbare Armlehne für einen Fahrzeugsitz mit einer bei der Schwenkbewegung wirksamen Bremse ist aus der DE 44 19 407 A 1 bekannt.

Der Erfindung liegt die Aufgabe zu Grunde, eine Einstellvorrichtung der eingangs genannten Art zu verbessern. Diese Aufgabe wird erfindungsgemäß durch eine Einstellvorrichtung mit den Merkmalen des Anspruches 1 und durch einen Fahrzeugsitz mit den Merkmalen des Anspruches 10 gelöst. Vorteilhafte Ausgestaltungen sind Gegenstand der Unteransprüche.

Erfindungsgemäß ist eine Bremse vorgesehen, welche bei wenigstens einer Bewegung des Fahrzeugsitzes und/oder einer Rückenlehne oder Sitzfläche desselben während des Einstellvorgangs wirksam ist und dabei die Einstellgeschwindigkeit verringert oder begrenzt. Steht das Fahrzeug beispielsweise am Berg, so verhindert die Bremse, dass der Fahrzeugsitz zu schnell in die hintere Sitzposition fährt. Die Bremse ist vorzugsweise so ausgebildet, dass sie nicht den Einstellvorgang als solchen abrupt beendet, sondern während des Einstellvorgangs lediglich dämpfend wirksam ist, beispielsweise indem sie nur eine begrenzte, maximale Einstellgeschwindigkeit zulässt. Vorzugsweise ist die Bremse dann nicht wirksam, wenn der Fahrzeugsitz vorgeholt werden soll, was ansonsten insbesondere für kleinere und schwächere Sitzbenutzer am Berg große Schwierigkeiten bereiten würde.

Die Bewegung des Fahrzeugsitzes bzw. dessen Teiles kann durch ein elastisches Mittel unterstützt werden. Die Bremse ist dann vorzugsweise beim Spannen des elastischen Mittels wirksam. Um die Wirksamkeit der Bremse auszusetzen, ist vorzugsweise ein Lösemittel vorgesehen, welches die Bremse bei wenigstens einer Bewegung des Fahrzeugsitzes bzw. des Teiles löst. Eine solche Bewegung kann beispielsweise das Freischwenken der Rückenlehne sein.

Die Bremse kann als geschwindigkeitsabhängige Flüssigkeitsreibungsbremse ausgebildet sein, mit beispielsweise einem Bremsengehäuse mit einem viskosen Medium und einem drehbaren Bremsenkörper darin. Die Bremse kann aber auch als kraftabhängige Reibungsbremse ausgebildet sein.

Die Bremse kann als Sitzbremse bei der Längseinstellung des Fahrzeugsitzes wirksam sein. Sie kann aber auch bei einem Teil des Fahrzeugsitzes, beispielsweise als Lehnenbremse bei der Rückenlehne, eingesetzt werden. Sie verhindert dann bei der Neigungseinstellung der Rückenlehne, daß die Rückenlehne aufgrund des Gewichts des Sitzbenutzers, insbesondere wenn das Fahrzeug am Berg steht, schnell nach hinten auf den Rücksitz oder auf die Knie der Fondsitzbenutzer klappt. Die Bremse kann auch bei Vorhandensein einer Lehnenkompensationsfeder ein schnelles Vorklappen und Auftreffen der Rückenlehne mit Wucht auf den Rücken des Sitzbenutzers verhindern. Die Bremse ist in einem solchen Fall direkt am Beschlag, beispielsweise einem Rastbeschlag, vorgesehen. Es ist vorteilhaft, die Änderung des Neigungswinkels der Rückenlehne durch eine Übersetzung für die Bremse zu erhöhen.

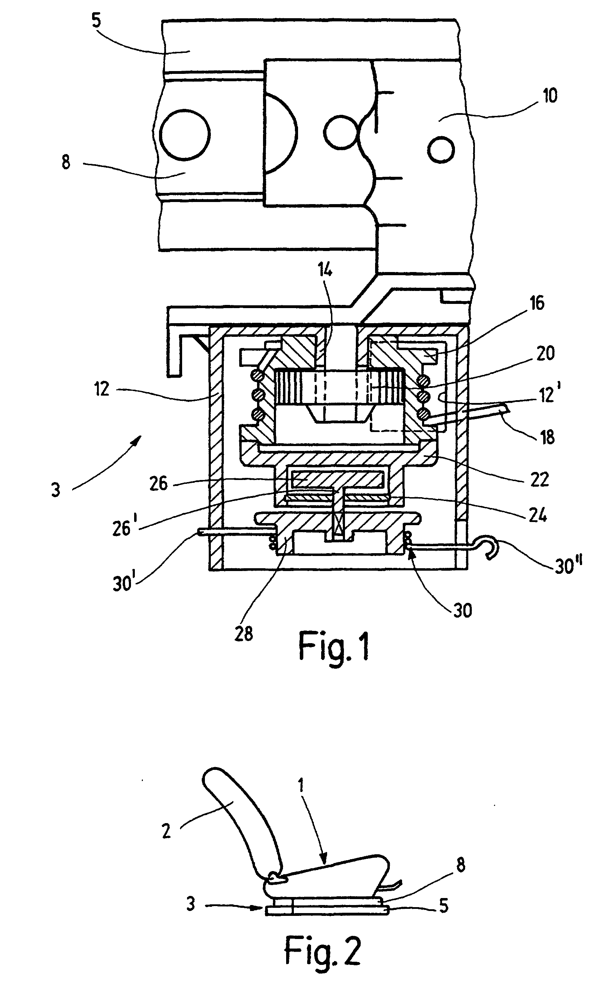

Im folgenden ist die Erfindung anhand eines in der Zeichnung dargestellten Ausführungsbeispiels näher erläutert. Es zeigen
- Fig. 1: eine teilweise geschnitten dargestellte Draufsicht auf einen Teil einer erfindungsgemäßen Einstellvorrichtung, und
- Fig. 2: eine Seitenansicht eines erfindungsgemäßen Fahrzeugsitzes.

Ein als Ganzes mit 1 bezeichneter Fahrzeugsitz, der als linker Vordersitz für ein zweitüriges Kraftfahrzeug ausgebildet ist, weist eine freischwenkbare Rückenlehne 2 und eine Längseinstellvorrichtung 3 auf. Mittels der Längseinstellvorrichtung 3 kann der Fahrzeugsitz 1 verschiedene Sitzpositionen in Längsrichtung des Kraftfahrzeuges einnehmen und in diesen verriegelt werden. Die Längseinstellvorrichtung 3 weist hierzu auf beiden Seiten des Fahrzeugsitzes 1 je ein Paar von Sitzschienen auf, bestehend aus einer fahrzeugstrukturfesten Unterschiene 5 und aus einer sitzstrukturfesten Oberschiene 8, die gleitend in der Unterschiene 5 geführt ist. Die Bauteile zur Verriegelung und Entriegelung des Fahrzeugsitzes 1 in den verschiedenen Sitzpositionen sind vorliegend nicht näher beschrieben. Hinsichtlich ihrer Ausgestaltung wird ausdrücklich auf die DE 196 47 448 A1 Bezug genommen.

Auf der Innenseite der im Ausführungsbeispiel linken Oberschiene 8 ist an einem Träger 10 ein dosenförmiges, kreiszylindrisches Gehäuse 12 angebracht. Das Gehäuse 12 ist mit einer offenen Stirnseite versehen, welche zur anderen Seite des Fahrzeugsitzes 1 hin weist. Auf einem Dorn 14 innerhalb des Gehäuses 12 ist auf einem Dorn 14 eine Seilrolle 16 gelagert, wobei der Dorn 14 eine Stirnwand der Seilrolle 16 durchdringt. In Richtung zur offenen Stirnseite des Gehäuses 12 hin ist die Seilrolle 16 ebenfalls mit einer offenen Stirnseite versehen.

Auf die Seilrolle 16 ist ein Zugseil 18 aufgewickelt, das an einem Ende an der Seilrolle 16 befestigt ist. Mit dem anderen Ende ist das Zugseil 18 durch eine Öffnung 12' des Gehäuses 12 hindurch radial nach außen geführt und im Bereich des vorderen Endes der zugehörigen Unterschiene 5 angebracht. Im Inneren der Seilrolle 16 ist auf den Dorn 14 eine Spiralfeder 20 gewickelt, die mit ihrem inneren Ende am Dorn 14 und mit ihrem äußeren Ende an der Seilrolle 16 befestigt ist. Die als elastisches Mittel dienende Spiralfeder 20 ist so gewickelt, daß sie beim Abrollen des Zugseiles 18 gespannt wird und das Aufrollen des Zugseiles 18 unterstützt.

An der Seilrolle 16 ist stirnseitig ein Bremsengehäuse 22 angebracht, das mit einem Dichtungsdeckel 24 verschlossen ist. Innerhalb des Bremsengehäuses 22 ist ein kreisscheibenförmiger Bremsenkörper 26 angeordnet, der von einem viskosen Medium, beispielsweise Silikongel, umgeben ist. Ein Achszapfen 26' des Bremsenkörpers 26 durchdringt den Dichtungsdeckel 24, welcher zum Einschließen des Silikongels und als Lager für den Achszapfen 26' dient. Der Achszapfen 26' fluchtet mit dem Dorn 14 und mit der Symmetrieachse der Seilrolle 16.

Auf dem Achszapfen 26' ist verdrehsicher eine kreiszylindrische Trommel 28 angebracht, deren Symmetrieachse mit dem Dorn 14 fluchtet. Auf der Trommel 28 ist eine Schlingfederbremse 30 montiert. Ein fixiertes Ende 30' der Schlingfederbremse 30 ist am Gehäuse 12 angebracht. Das andere, freie Ende 30" ist aus dem Gehäuse 12 herausgeführt.

Um eine hintere Sitzposition einzunehmen, wird die Längseinstellvorrichtung 3 entriegelt und der Fahrzeugsitz 1 nach hinten geschoben. Dabei wird das Zugseil 18 von der Seilrolle 16 abgewickelt, welche sich hierzu dreht. Zugleich wird die Spiralfeder 20 enger gewickelt, also gespannt. Durch die Drehung der Seilrolle 16 dreht sich auch das Bremsengehäuse 22. Die Schlingfederbremse 30 sperrt die Trommel 28, so daß auch der Bremsenkörper 26 gesperrt wird. Dadurch dreht sich das Bremsengehäuse 22 relativ zum Bremsenkörper 26, wodurch die Bewegung des Fahrzeugsitzes 1 nach hinten gebremst wird.

Um eine vordere Sitzposition einzunehmen, wird der Fahrzeugsitz 1 nach dem Entriegeln nach vorne geschoben. Die Spiralfeder 20 entspannt sich und dreht dabei die Seilrolle 16, welche das Zugseil 18 aufwickelt, wodurch die Bewegung des Fahrzeugsitzes 1 nach vorne unterstützt wird. Mit dem Einsetzen der Drehung der Seilrolle 16 dreht sich auch das Bremsengehäuse 22, welches wegen der hohen Viskosität den Bremsenkörper 26 mitnimmt, der wiederum die Trommel 28 in Bewegung versetzt. Aufgrund der anderen Drehrichtung löst sich die Schlingfederbremse 30, so daß die Trommel 28 über den Bremsenkörper 26 und das Bremsengehäuse 22 von der Seilrolle 16 gedreht wird. Die Relativdrehung zwischen Bremsenkörper 26 und Bremsengehäuse 22 ist verschwindend gering, so daß der Verschiebekraft nur eine geringe Reibungskraft entgegengesetzt wird.

Mit dem Freischwenken der Rückenlehne 2 erfolgt ein Verschieben des Fahrzeugsitzes 1 nach vorne, um den Einstieg in den Fond zu erleichtern. Durch eine in der Zeichnung nicht dargestellte Betätigungsvorrichtung wird das freie Ende 30" der Schlingfederbremse 30 betätigt, also die Enden 30' und 30" der Schlingfederbremse 30 aufeinander zu bewegt, so daß die Schlingfederbremse 30 sich von der Trommel 28 löst. Wie im Falle der Längseinstellung des Fahrzeugsitzes 1 nach vorne, tritt beim Verschieben nur eine geringe Reibungskraft auf, so daß der Fahrzeugsitz 1 beim Freischwenkvorgang in beide Richtungen leicht verschoben werden kann.

### Bezugszeichenliste

- 1: Fahrzeugsitz
- 2: Rückenlehne
- 3: (Längs)Einstellvorrichtung
- 5: Unterschiene
- 8: Oberschiene
- 10: Träger
- 12: Gehäuse
- 12': Öffnung
- 14: Dorn
- 16: Seilrolle
- 18: Zugseil
- 20: elastisches Mittel, Spiralfeder
- 22: Bremsengehäuse
- 24: Dichtungsdeckel
- 26: Bremsenkörper
- 26': Achszapfen
- 28: Trommel
- 30: Lösemittel, Schlingfederbremse
- 30': fixiertes Ende
- 30": freies Ende

## Patentansprüche

1. Einstellvorrichtung (3) für einen Fahrzeugsitz (1), insbesondere für einen Kraftfahrzeugsitz, mittels derer der Fahrzeugsitz (1) und/oder eine Rückenlehne (2) desselben bewegbar und in wenigstens einer Position verriegelbar ist, **dadurch gekennzeichnet, dass** eine Bremse (22, 24, 26) vorgesehen ist, welche bei wenigstens einer Bewegung des Fahrzeugsitzes (1) bzw. der Rückenlehne (2) nach hinten während des Einstellvorgangs wirksam ist und dabei die Einstellgeschwindigkeit verringert oder begrenzt.

2. Einstellvorrichtung nach Anspruch 1, **dadurch gekennzeichnet, dass** die Bremse (22, 24, 26) während des Einstellvorgangs lediglich dämpfend wirksam ist, indem sie nur eine begrenzte, maximale Einstellgeschwindigkeit zulässt.

3. Einstellvorrichtung nach Anspruch 1 oder 2, **dadurch gekennzeichnet, dass** ein elastisches Mittel (20) vorgesehen ist, welches wenigstens eine Bewegung des Fahrzeugsitzes (1) bzw. der Rückenlehne (2) unterstützt.

4. Einstellvorrichtung nach Anspruch 3, **dadurch gekennzeichnet, dass** die Bremse (22, 24, 26) beim Spannen des elastischen Mittels (20) wirksam ist.

5. Einstellvorrichtung nach einem der Ansprüche 1 bis 4, **dadurch gekennzeichnet, dass** ein Lösemittel (30) vorgesehen ist, welches die Bremse (22, 24, 26) bei wenigstens einer Bewegung des Fahrzeugsitzes (1) bzw. der Rückenlehne (2) löst.

6. Einstellvorrichtung nach Anspruch 5, **dadurch gekennzeichnet, dass** das Lösemittel (30) beim Freischwenken der Rückenlehne (2) des Fahrzeugsitzes (1) wirksam ist.

7. Einstellvorrichtung nach einem der Ansprüche 1 bis 6, **dadurch gekennzeichnet, dass** die Bremse (22, 24, 26) ein Bremsengehäuse (22) mit einem viskosen Medium und einem drehbaren Bremsenkörper (26) darin aufweist.

8. Einstellvorrichtung nach einem der Ansprüche 1 bis 7, **dadurch gekennzeichnet, dass** mit der Einstellvorrichtung (3) der Fahrzeugsitz (1) längseinstellbar ist.

9. Einstellvorrichtung nach einem der Ansprüche 1 bis 7, **dadurch gekennzeichnet, dass** mit der Einstellvorrichtung die Rückenlehne (2) des Fahrzeugsitzes (1) neigungseinstellbar ist.

10. Fahrzeugsitz, **gekennzeichnet durch** wenigstens eine Einstellvorrichtung nach einem der Ansprüche 1 bis 9.

## Claims

1. Adjustment device (3) for a vehicle seat (1), in particular for a motor vehicle seat, by means of which the vehicle seat (1) and/or a backrest (2) thereof can be moved and locked in at least one position, **characterised in that** a brake (22, 24, 26) is provided which is effective during at least a backward movement of the vehicle seat (1) or the backrest (2) during the adjustment operation and reduces or limits the adjustment speed.

2. Adjustment device according to claim 1, **characterised in that** the brake (22, 24, 26) merely has a damping effect during the adjustment operation, by allowing only a limited maximum adjustment speed.

3. Adjustment device according to claim 1 or 2, **characterised in that** a resilient means (20) is provided which supports at least a movement of the vehicle seat (1) or the backrest (2).

4. Adjustment device according to claim 3, **characterised in that** the brake (22, 24, 26) is effective when the resilient means (20) is tensioned.

5. Adjustment device according to any one of claims 1 to 4, **characterised in that** an actuation means (30) is provided which actuates the brake (22, 24, 26) during at least a movement of the vehicle seat (1) or the backrest (2).

6. Adjustment device according to claim 5, **characterised in that** the actuation means (30) is effective when the backrest (2) of the vehicle seat (1) is pivoted freely.

7. Adjustment device according to any one of claims 1 to 6, **characterised in that** the brake (22, 24, 26) has a brake housing (22) having a viscous medium and a rotatable brake body (26) therein.

8. Adjustment device according to any one of claims 1 to 7, **characterised in that** the vehicle seat (1) can be longitudinally adjusted by means of the adjustment device (3).

9. Adjustment device according to any one of claims 1 to 7, **characterised in that** the backrest (2) of the vehicle seat (1) can be adjusted in terms of inclination by means of the adjustment device.

10. Vehicle seat, **characterised by** at least one adjustment device according to any one of claims 1 to 9.

## Revendications

1. Dispositif de réglage (3) pour un siège de véhicule (1), en particulier pour un siège de véhicule automobile, au moyen duquel le siège de véhicule (1) et/ou un dossier (2) de celui-ci est déplaçable et verrouillable dans au moins une position, **caractérisé par le fait qu'**un frein (22, 24, 26) est prévu, lequel est actif pendant le processus de réglage dans le cas d'au moins un mouvement du siège de véhicule (1) ou du dossier (2) vers l'arrière et à cette occasion diminue ou limite la vitesse de réglage.

2. Dispositif de réglage selon la revendication (1), **caractérisé par le fait que** le frein (22, 24, 26) est actif de manière simplement amortissante pendant le processus de réglage **par le fait qu'**il permet seulement une vitesse de réglage maximale limitée.

3. Dispositif de réglage selon l'une des revendications 1 ou 2, **caractérisé par le fait qu'**un moyen élastique (20) est prévu, lequel aide au moins un mouvement du siège de véhicule (1) ou du dossier (2).

4. Dispositif de réglage selon la revendication 3, **caractérisé par le fait que** le frein (22, 24, 26) est actif lors de la tension du moyen élastique (20).

5. Dispositif de réglage selon l'une des revendications 1 à 4, **caractérisé par le fait qu'**un moyen de desserrage (30) est prévu, lequel desserre le frein (22, 24, 26) lors d'au moins un mouvement du siège de véhicule (1) ou du dossier (2).

6. Dispositif de réglage selon la revendication 5, **caractérisé par le fait que** le moyen de desserrage (30) est actif lors du pivotement libre du dossier (2) du siège de véhicule (1).

7. Dispositif de réglage selon l'une des revendications 1 à 6, **caractérisé par le fait que** le frein (22, 24, 26) présente un boîtier de frein (22) avec un milieu visqueux et un corps de frein tournant (26) dans celui-ci.

8. Dispositif de réglage selon l'une des revendications 1 à 7, **caractérisé par le fait qu'**il est réglable en longueur par le dispositif de réglage (3) du siège de véhicule (1).

9. Dispositif de réglage selon l'une des revendications 1 à 7, **caractérisé par le fait qu'**avec le dispositif de réglage, le dossier (2) du siège de véhicule (1) est réglable en inclinaison.

10. Siège de véhicule **caractérisé par** au moins un dispositif de réglage tel que défini à l'une des revendications 1 à 9.
